# EUROPEAN PATENT APPLICATION

(11) **EP 4 597 284 A1**
(43) Date of publication of application: **06.08.2025**
(21) Application number: 23889011.5
(22) Date of filing: 31.10.2023
(51) Int. Cl.: G06F 3/04842, H04W 4/80, G06T 19/20, H04M 1/72409, H04N 21/4363

(54) **ELECTRONIC DEVICE FOR PROVIDING REPRESENTATIVE IMAGE OF EXTERNAL ELECTRONIC DEVICE, METHOD FOR OPERATING SAME, AND STORAGE MEDIUM**

(30) Priority: 08.11.2022 KR 20220147655; 10.11.2022 KR 20220149285
(71) Applicant: Samsung Electronics Co., Ltd., Suwon-si, Gyeonggi-do 16677 (KR)
(72) Inventor: AHN, Mikyung, Suwon-si Gyeonggi-do 16677 (KR); CHOI, Kunyoung, Suwon-si Gyeonggi-do 16677 (KR)
(74) Representative: Appleyard Lees IP LLP
(86) International application number: PCT/KR2023/017105
(87) International publication number: WO 2024/101749

(57) **Abstract**

According to an embodiment, this electronic device (101) may comprise a communication module (290), a display (260), memory (230) comprising instructions, and a processor (220). According to an embodiment, the instructions may be configured to cause, when executed by the processor, the electronic device to connect to an external electronic device through the communication module. According to an embodiment, the instructions may be configured such that the electronic device identifies whether the external electronic device is sensed within a threshold range while displaying an image on the display. According to an embodiment, the instructions may be configured such that the electronic device identifies the direction and distance of the external electronic device with reference to the electronic device on the basis of sensing of the external electronic device within the threshold range. According to an embodiment, the instructions may be configured such that the electronic device identifies whether the image can be converted to a three-dimensional image. According to an embodiment, the instructions may be configured such that the electronic device provides a preview of the three-dimensional image which changes depending on the identified direction and distance of the external electronic device through the external electronic device if the image can be converted to the three-dimensional image.

## Description

### [Technical Field]

An embodiment of the disclosure relates to an electronic device for providing a representative image of an external electronic device, an operation method thereof, and a storage medium.

### [Background Art]

With the development of communication technologies, wearable electronic devices may come in a more compact and lightweight form factor to be worn on the user's body without discomfort. For example, commercially available wearable electronic devices include head mounted display (HMD) devices, smart watches (or bands), contact lens-type devices, ring-type devices, glove-type devices, shoe-type devices, or clothing-type devices. Since the wearable electronic device is directly worn on the user's body, more portability and user accessibility may be obtained.

As a recent consumption trend places more importance on design, use convenience of wearable electronic devices, as well as the external design of wearable electronic devices, is considered a critical factor in the development of wearable electronic devices.

### [Detailed Description of the Invention]

### [Technical Solution]

According to an embodiment, an electronic device 101 may comprise a communication module 290, a display 260, memory 230 including instructions, and a processor 220. According to an embodiment, the instructions may be configured to, when executed by the processor, cause the electronic device to connect to an external electronic device through the communication module. According to an embodiment, the instructions may be configured to, when executed by the processor, cause the electronic device to identify whether the external electronic device is detected within a threshold range while displaying an image on the display. According to an embodiment, the instructions may be configured to, when executed by the processor, cause the electronic device to identify a direction and distance of the external electronic device with respect to the electronic device, based on the external electronic device being detected within the threshold range. According to an embodiment, the instructions may be configured to, when executed by the processor, cause the electronic device to identify whether the image is convertible into a 3D image. According to an embodiment, the instructions may be configured to, when executed by the processor, cause the electronic device to, when the image is convertible into the 3D image, provide a preview of the 3D image varying according to the identified direction and distance of the external electronic device through the external electronic device.

According to an embodiment, a method for providing a representative image of an external electronic device by an electronic device may comprise identifying whether the external electronic device is detected within a threshold range while displaying an image. According to an embodiment, the method may comprise identifying a direction and distance of the external electronic device with respect to the electronic device, based on the external electronic device being detected within the threshold range. According to an embodiment, the method may comprise identifying whether the image is convertible into a 3D image. According to an embodiment, the method may comprise, when the image is convertible into the 3D image, providing a preview of the 3D image varying according to the identified direction and distance of the external electronic device through the external electronic device.

According to an embodiment, in a non-volatile storage medium storing instructions configured to, when executed by a processor 220 of an electronic device 101, cause the electronic device to perform at least one operation, the at least one operation may comprise identifying whether the external electronic device is detected within a threshold range while displaying an image. According to an embodiment, the at least one operation may comprise identifying a direction and distance of the external electronic device with respect to the electronic device, based on the external electronic device being detected within the threshold range. According to an embodiment, the at least one operation may comprise identifying whether the image is convertible into a 3D image. According to an embodiment, the at least one operation may comprise, when the image is convertible into the 3D image, providing a preview of the 3D image varying according to the identified direction and distance of the external electronic device through the external electronic device.

### [Brief Description of the Drawings]

FIG. 1 is a block diagram illustrating an electronic device in a network environment according to an embodiment;
FIG. 2 is a block diagram illustrating an internal configuration of an electronic device communicating with an external electronic device according to an embodiment;
FIG. 3 is a flowchart illustrating operations of an electronic device for providing a representative image of an external electronic device according to an embodiment;
FIG. 4 is a flowchart illustrating signal transmission/reception between an electronic device and an external electronic device according to an embodiment;
FIG. 5 is a view illustrating a method for identifying a distance from an electronic device to an external electronic device according to an embodiment;
FIG. 6 is a view illustrating a method for identifying a direction of an external electronic device with respect to an electronic device according to an embodiment;
FIG. 7A is a view illustrating a method for identifying an upper or lower direction of an external electronic device with respect to an electronic device according to an embodiment;
FIG. 7B is a view illustrating a method for obtaining a 3D image according to an embodiment;
FIG. 8A is an exemplary view illustrating an external electronic device displaying a preview that varies depending on a left long distance or a left short distance with respect to an electronic device according to an embodiment;
FIG. 8B is an exemplary view illustrating an external electronic device displaying a preview that varies depending on a right long distance or a right short distance with respect to an electronic device according to an embodiment;
FIG. 9A is an exemplary view illustrating an external electronic device displaying a preview that varies depending on a left lower long distance or a left lower short distance with respect to an electronic device according to an embodiment;
FIG. 9B is an exemplary view illustrating an external electronic device displaying a preview that varies depending on a right lower long distance or a right lower short distance with respect to an electronic device according to an embodiment;
FIG. 10 is a view illustrating a preview with respect to an object included in an image according to an embodiment;
FIG. 11A is a view illustrating a method for setting a representative image according to an embodiment;
FIG. 11B is a view illustrating a method for transmitting an image according to a setting of a representative image according to an embodiment;
FIG. 12 is an exemplary view illustrating setting completion of a representative image according to an embodiment;
FIG. 13 is an exemplary view illustrating a representative image that varies according to a movement of an external electronic device within a predetermined angular range according to an embodiment;
FIG. 14A is an exemplary view illustrating an external electronic device displaying a preview that resizes depending on distance when it is not convertible into a 3D image according to an embodiment; and
FIG. 14B is an exemplary view according to setting completion of a representative image when it is not convertible into a 3D image according to an embodiment.

The same or similar reference denotations may be used to refer to the same or similar elements throughout the specification and the drawings.

### [Mode for Carrying out the Invention]

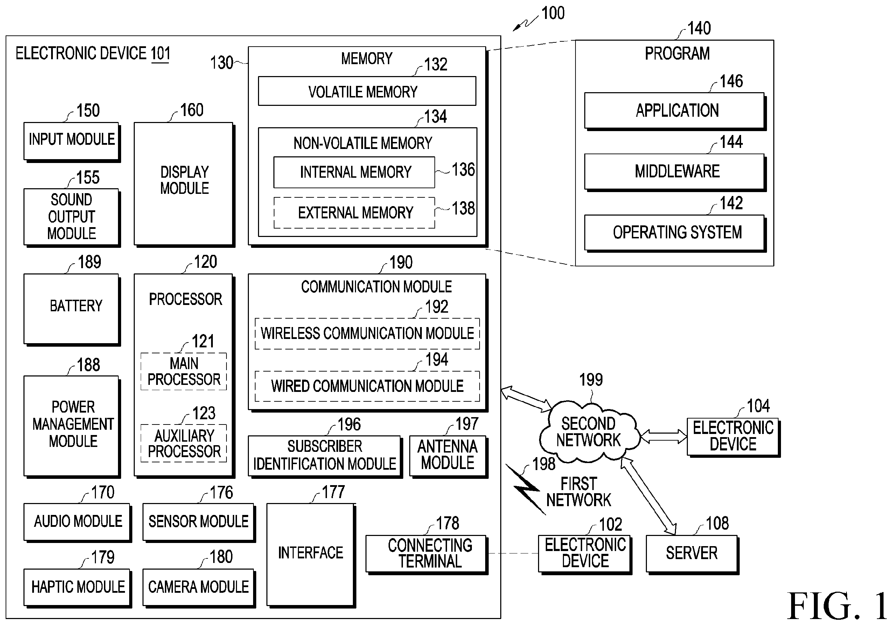

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

In the following description, the components easy to understand from the description of the above embodiments are denoted with or without the same reference numerals and their detailed description may be skipped. According to an embodiment of the disclosure, an electronic device 101 may be implemented by selectively combining configurations of different embodiments, and the configuration of one embodiment may be replaced by the configuration of another embodiment. However, it is noted that the present invention is not limited to a specific drawing or embodiment.

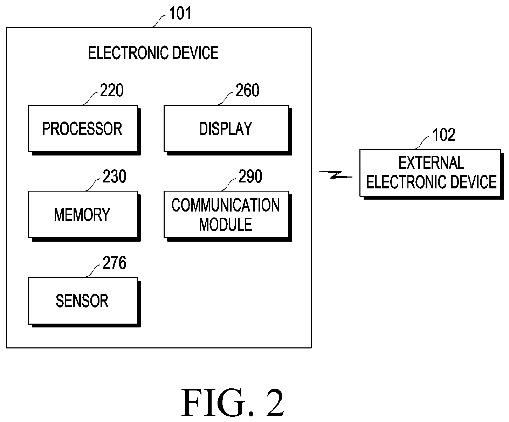

FIG. 2 is a block diagram illustrating an internal configuration of an electronic device communicating with an external electronic device according to an embodiment.

Referring to FIG. 2, according to an embodiment, an electronic device 101 (e.g., the electronic device 101 of FIG. 1) may include a processor 220 (e.g., the processor 120 of FIG. 1), memory 230 (e.g., the memory 130 of FIG. 1), a display 260 (e.g., the display module 160 of FIG. 1), a sensor 276 (e.g., the sensor module 176 of FIG. 1), and/or a communication module 290 (e.g., the communication module 190 of FIG. 1). Not all of the components of FIG. 2 are essential ones of the electronic device 101 but the electronic device 101 may be implemented with more or less than the components of FIG. 2. The external electronic device 102 of FIG. 2 may be the electronic device 102 of FIG. 1. According to an embodiment, the external electronic device 102 may be a watch-type wearable electronic device.

According to an embodiment, the memory 230 may store a program or at least one application supporting at least one user function, executed through an operating system related to the operation of the electronic device 101 and/or the electronic device 101. According to an embodiment, the memory 230 may store a control program for controlling the electronic device 101, a UI related to an application downloaded from the outside or provided by the manufacturer and images for providing the UI, user information, documents, databases, or related data. For example, the memory 230 may store user settings related to an operation for setting a representative image of the external electronic device 102.

According to an embodiment, the processor 220 may store, in the memory 230, a setting related to the control of displaying, through the external electronic device 102, an image in which a size or shown portion is varied according to the position of the external electronic device 102 with respect to the electronic device 101 and, in response to a selection for the image displayed on the external electronic device 102, setting the selected image as a representative image of the external electronic device 102. For example, the position of the external electronic device 102 may indicate the direction and/or distance of the external electronic device 102 within a predetermined range of the electronic device 101 with respect to the electronic device 101.

According to an embodiment, the image in which the size or shown portion varies according to the position of the external electronic device 102 may be a three-dimensional (3D) image. According to an embodiment, the memory 230 may store a learning network model configured to convert a 2D image into a 3D image (or a 3D modeling image) when the 2D image is input. The memory 230 may store instructions for controlling to display the 3D image obtained by applying the learning network model to the 2D image on the display of the external electronic device 102. Here, the learning network model may be trained using 2D images. Here, the 2D image may be at least one of a photo, a picture, a still image, or a captured image. The 2D image may include at least one object for converting into a 3D image. Here, the object may correspond to an object capable of specifying the shape of an object included in the image, such as a person or an animal.

According to an embodiment, the memory 230 may store a 3D image in another form as well as the 3D image obtained by applying the learning network model to the 2D image. For example, the 3D image in the other form may be a 3D graphic image, and may include a virtual 3D character image, such as an avatar. For example, the processor 220 may control to display, through the external electronic device 102, the 3D graphic image (e.g., 3D character image) in which the size or shown portion is varied according to the position of the external electronic device 102 with respect to the electronic device 101 without the need for performing the operation of converting into a 3D image using the learning network model when the external electronic device 102 approaches within a predetermined range of the electronic device 101 in a state in which the 3D graphic image (e.g., 3D character image) is displayed on the display 260.

According to an embodiment, the communication module 290 may be communicatively connected with an external electronic device 102. According to an embodiment, the communication module 290 may be connected with one or more external electronic devices (e.g., 102 of FIG. 1) through a 1:1 connection or 1:n connection. Further, the communication module 290 may be wirelessly connected to the external electronic device 102 through various communication schemes.

According to an embodiment, the communication module 290 may operate based on at least one of ultra-wide band (UWB) communication schemes or Bluetooth low energy (BLE) communication schemes.

For example, the communication module 290 may include a UWB communication module. The UWB communication module may support the electronic device 101 to perform UWB communication with the external electronic device 102. The UWB communication module may measure the distance between the electronic device 101 and the external electronic device 102 through UWB communication. The UWB communication module may measure the direction (e.g., angle of arrival (AOA)) of the external electronic device 102 using a plurality of antennas.

In describing the external electronic device 102, detailed descriptions of configurations similar to those of the embodiment of FIG. 1 or easily understandable through the embodiment of FIG. 1 may be omitted.

According to an embodiment, an example is described below in which the electronic device 101 is a device outputting content such as an image, and the external electronic device 102 is a wearable electronic device (e.g., a wearable watch) that may be worn (or attached) on a body part of the user, but the disclosure is not limited thereto. For example, even when the electronic device 101 is, e.g., a tablet, and the external electronic device 102 is, e.g., a smartphone, operations related to the control of providing a preview obtained by converting the image displayed on the tablet screen into a 3D image varied according to the direction and distance of the external electronic device 102 to the external electronic device 102 and setting it as a representative image of the external electronic device 102 in response to selection of the preview may be performed.

**In** an embodiment, an example of providing an image varied based on the position or direction of one external electronic device 102 with respect to the electronic device 101 is described, but it is also possible to control an image varied based on the position or direction with respect to two or more external electronic devices 102. For example, when the user wears a plurality of external electronic devices 102 including a wearable watch and a head-mounted display, the processor 220 may be connected with the n external electronic devices 102 through the 1:n connection supported by the communication module 290.

In an embodiment, since the external electronic device 102, such as a head-mounted display, includes a camera (e.g., ToF camera or eye tracking camera), it may grasp distance information with the electronic device 101 and track the user's gaze.

In an embodiment, the processor 220 may obtain information related to the user's position from the n external electronic devices 102. The user position-related information may be used to identify the user's position or direction with respect to the electronic device 101. For example, the processor 220 may receive user position-related information that combines the distance information, user gaze information, user direction information, and/or user altitude information with the electronic device 101 received from the n external electronic devices 102. The processor 220 may determine the user's moving position based on the received user position-related information and perform image display control corresponding to the determined user position. As such, when two or more external electronic devices are used, the accuracy for determining the position of the watch-type wearable electronic device may be enhanced.

The sensor 276 according to an embodiment may include a proximity sensor for detecting approach of the external electronic device 102. For example, the processor 220 may identify whether the external electronic device 102 is detected within a predetermined range using the proximity sensor. According to an embodiment, the processor 220 may identify the direction and distance of the external electronic device 102 with respect to the electronic device 101 based on the external electronic device 102 being detected within the predetermined range. For example, the processor 220 may identify the direction and distance of the external electronic device 102 based on at least one of an ultra-wide band (UWB) communication scheme or Bluetooth low energy (BLE) communication scheme of the communication module 290.

According to an embodiment, the sensor 276 may include a gyro sensor, an accelerometer, and/or a geomagnetic sensor for detecting the state (e.g., posture) of the electronic device 101. For example, the electronic device 101 may determine a relative azimuth to a reference azimuth using the geomagnetic sensor. The electronic device 101 may obtain the final azimuth using UWB by means of the relative azimuth to the reference azimuth and the UWB angle of arrival (AOA) using the geomagnetic sensor. The sensor 276 may be used as a 9-axis motion sensor using a gyro sensor, accelerometer, and geomagnetic sensor.

The processor 220 may execute at least one application and visually output content corresponding to the application through the display 260. For example, processor 220 may output the captured image through the display 260 in response to a selection of a camera application. Further, the processor 220 may output stored images through the display 260 in response to a selection of a gallery application. The image through the display 260 may be referred to as content or may also be referred to as data, screen data, or application execution screen related to the running application.

For example, the processor 220 may quickly select a photo from the gallery and set it as the representative image of the external electronic device 102. Here, the representative image may be referred to as a watchface. In this case, while the photo in the gallery is displayed through the display 260 of the electronic device 101, the processor 220 may control to display, on the display of the external electronic device 102, a preview in which the photo is varied according to the direction or distance of the external electronic device 102. For example, the processor 220 may transmit, in real-time to the external electronic device 102, data related to the preview in which the size or the shown surface according to the direction or distance of the external electronic device 102 is varied. Further, the processor 220 may transmit, to the external electronic device 102, a plurality of 3D images (or previews) periodically or every predetermined data unit to display the preview of the 3D image in which the size and the shown surface of the object included in the photo according to the direction and distance of the external electronic device 102, are varied. Further, when at least one of the direction and distance of the external electronic device 102 is varied by a threshold or more, a plurality of 3D images (or previews) corresponding to the varied direction and distance range may be transmitted to the external electronic device 102. As such, the time of transmission as to when the data related to the preview to be displayed on the external electronic device 102 is to be transmitted by how much may not be limited.

According to an embodiment, the processor 220 may provide a function for setting a representative image of the external electronic device 102 when detecting the external electronic device 102 within a threshold range while displaying an image. The function may be activated or inactivated through the settings menu. Accordingly, when the function is set as active, the processor 220 may continuously track the position or direction of the external electronic device 102 while displaying the image through the display 260. For example, when detecting the external electronic device 102 within the threshold range while displaying the image, the processor 220 may display an icon indicating the detection of the external electronic device 102 or display a notification window indicating that the representative image setting operation is started on at least a portion of the display 260.

According to an embodiment, the processor 220 may identify the position or direction of the external electronic device 102 with respect to the electronic device 101 based on at least one of the UWB communication scheme or BLE communication scheme of the communication module 290. For example, a UWB communication scheme-based UWB angle of arrival (AOA) measurement scheme is a scheme that uses a time difference between a plurality of antenna signals and may identify the position or direction of the external electronic device 102 based on the signal received using the antenna of the communication module 290 and identify the distance from the external electronic device 102 away from the electronic device 101. For example, the electronic device 101 may further include an antenna module (e.g., UWB antenna) for identifying at least one of the position, direction, or distance of the external electronic device 102. For example, the antenna module may include a plurality of antennas for measuring at least one of the position, direction, or distance of the external electronic device 102. For example, the electronic device 101 may measure the distance and/or direction (or angle (e.g., AOA)) from the external electronic device 102 using at least two antennas among the plurality of antennas included in the antenna module.

According to an embodiment, the processor 220 may detect the external electronic device 102 based on the BLE communication scheme and then activate the UWB signal scanning for UWB AOA measurement. For example, if the external electronic device 102 is discovered through the BLE communication scheme, the processor 220 may activate the UWB signal scanning by transmitting information necessary for UWB communication through BLE communication. The processor 220 may be connected with the external electronic device 102 through UWB communication using the transmitted information. According to an embodiment, the processor 220 may broadcast a ranging message (e.g., ranging control message or ranging request message) to the external electronic device 102. The processor 220 may broadcast the ranging request message every transmission interval. The processor 220 may receive a ranging response message (e.g., response message) from the external electronic device 102 that has received the ranging request message and identify the relative position of the external electronic device 102 to the electronic device 101.

In the foregoing description, the position or direction of the external electronic device 102 is identified using the UWB communication scheme or BLE communication scheme of the communication module 290 as an example, but may not be limited thereto. For example, the processor 220 may detect the external electronic device 102 in any one direction of the upper, lower, left, and right directions with respect to the front center axis of the electronic device 101 using the sensor 276. To that end, the sensor 276 may include at least one of an infrared sensor, an ultrasonic sensor, a motion sensor, a 3D sensor, and a vision sensor, but the type of the sensor is not limited thereto. A combination of the information sensed by at least two sensors among the sensors may be used to identify the posture (or pose), position, and distance from the electronic device 101 and direction of the external electronic device 102. Further, a camera (e.g., the camera module 180 of FIG. 1) and lidar may be used to identify the posture (or pose), position, and distance from the electronic device 101 and direction of the external electronic device 102.

For example, the sensor 276 may be an RF spectrum-type sensor. The sensor 276 may use the frequency of the 60GHz Wi-Fi wireless antenna. For example, the processor 220 may send an RF signal toward the external electronic device 102 using the sensor 276, receive the returning radio signal, and analyze the pattern of the RF signal radiated and reflected by the target object. The posture (or pose), position, and distance to the electronic device 101 and direction of the external electronic device 102 may be identified based on the pattern of the RF signal. For example, air gesture recognition based on RF signals uses a frequency domain of 5GHz to 60GHz and may have a field of view (FOV) of 160 to 180 degrees. When such an RF signal is used, fine control of functions related to preview display according to the direction and distance of the external electronic device 102 may be possible within the proximity range.

As described above, the processor 220 may recognize the external electronic device 102 in the proximity area of the electronic device 101, e.g., the spatial range in which the external electronic device 102 is recognized, based on the sensing data of the sensor 276. According to an embodiment, when the external electronic device 102 is detected in the proximity area, the processor 220 may activate a function for setting a representative image of the external electronic device 102. By so doing, it is possible to easily set a representative image of the external electronic device 102 even without entering the menu through several stages. According to an embodiment, an icon for setting an image varied according to the direction and distance of the external electronic device 102 as a representative image may be displayed on the screen of the electronic device 101, and when the icon is selected, the processor 220 may activate a function for setting a representative image of the external electronic device 102.

According to an embodiment, when the external electronic device 102 is detected in the proximity area, the processor 220 may display, through the display of the external electronic device 102, a preview varied according to the movement of the external electronic device 102, e.g., varied according to the direction and distance, in the proximity area based on the image currently being displayed on the display 260. Here, the image currently being displayed on the display 260 may be a 2D image, but the preview displayed through the display of the external electronic device 102 may be a 3D image. The 2D image may include at least one object for converting into a 3D image. Here, the object may correspond to an object capable of specifying the shape of an object included in the image, such as a person or an animal. For example, since a 3D image is stereoscopic, it may be viewed from any direction of 360 degrees, and the size of the 3D image may vary depending on the viewing position. When it is assumed that the object included in the image is an animal, different images may be provided through the external electronic device 102 when the animal is viewed from the front and the animal is viewed from the side. Here, that the animal may be seen from the front or from the side may assume that the 3D image generated in the virtual space is viewed from the front or from the side of the virtual space.

Thus, when identifying that an object is included in the image, the processor 220 may set an object area centered on the identified object, e.g., the face of the person or animal, and set the size of the object area to correspond to the display size of the external electronic device 102. For example, the processor 220 may identify whether the object included in the image is a human face based on a face detection algorithm. The method for identifying the object included in the image may not be limited thereto. According to an embodiment, in the case of a person or animal, the object area is set based on the face but, otherwise, an object area may be set based on an object, e.g., the entire subject, included in the image. In other words, the object area may be set to include the entire subject.

Accordingly, the processor 220 may perform focusing on the object area to provide a focused preview. As such, the processor 220 may provide a preview centered on the object area in the image, so that it is possible to set an optimized representative image.

According to an embodiment, the processor 220 may identify whether the displayed image may be converted into a 3D image in order to provide an image varied according to the direction and distance of the external electronic device 102 through the external electronic device 102. If it is possible to convert into a 3D image, it may be converted into a 3D image using images corresponding to each of the direction and distance of the external electronic device 102.

On the other hand, if it is not convertible to a 3D image, the processor 220 may provide, through the external electronic device 102, a preview of an image resized, e.g., enlarged or shrunken, according to the distance of the external electronic device 102 with respect to the electronic device 101.

According to an embodiment, when setting a representative image of the external electronic device 102, the processor 220 may transmit an image of a preview corresponding to a user selection, e.g., an image corresponding to the selected direction and distance, to the external electronic device 102 through the communication module 290. Accordingly, the external electronic device 102 may set the image corresponding to the selected direction and distance as a representative image of the external electronic device 102. Further, when the image being displayed is not convertible into a 3D image, the processor 220 may transmit the image corresponding to the distance selected by the user to the external electronic device 102.

According to an embodiment, the processor 220 may provide one image itself corresponding to the selected direction and distance to the external electronic device 102, but may provide a plurality of images to the external electronic device 102 to move within a preset angular range based on the selected direction and distance.

According to an embodiment, the processor 220 may identify at least one of the direction and the distance of the external electronic device 102 while the external electronic device 102 is positioned within the proximity area. The processor 220 may perform the operation of generating an image varied corresponding to at least one of the direction and distance of the identified external electronic device 102 using the displayed image, and providing the image through the external electronic device 102. According to an embodiment, the processor 220 may pause the operation of setting the representative image when the external electronic device 102 is not detected within the proximity area while providing the image varied corresponding to at least one of the direction and distance of the identified external electronic device 102 through the external electronic device 102. Further, the processor 220 may pause the operation of setting the representative image and then terminate the operation of setting the representative image when the external electronic device 102 is not detected within the proximity area for a predetermined time or longer.

According to an embodiment, an electronic device 101 may comprise a communication module 290, a display 260, memory 230 storing instructions, and a processor 220. According to an embodiment, the instructions may be configured to, when executed by the processor, cause the electronic device to connect to an external electronic device through the communication module. According to an embodiment, the instructions may be configured to, when executed by the processor, cause the electronic device to identify whether the external electronic device is detected within a threshold range while displaying an image on the display. According to an embodiment, the instructions may be configured to, when executed by the processor, cause the electronic device to identify a direction and distance of the external electronic device with respect to the electronic device, based on the external electronic device being detected within the threshold range. According to an embodiment, the instructions may be configured to, when executed by the processor, cause the electronic device to identify whether the image is convertible into a 3D image. According to an embodiment, the instructions may be configured to, when executed by the processor, cause the electronic device to, in case that the image is convertible into the 3D image, provide a preview of the 3D image varying according to the identified direction and distance of the external electronic device through the external electronic device.

According to an embodiment, in the preview of the 3D image a size and shown surface of an object included in the image, may be varied according to the identified direction and distance of the external electronic device.

According to an embodiment, the instructions may be configured to cause the electronic device to, while the preview of the 3D image is displayed through the external electronic device, identify whether the direction and distance of the external electronic device are varied, provide a preview of a 3D image, in which a size and shown surface of an object included in the image, are varied as the direction and distance of the external electronic device are varied, through the external electronic device, and in response to a selection for a watchface setting of the external electronic device, transmit a 3D image corresponding to the selection for the watchface setting of the external electronic device to the external electronic device.

According to an embodiment, the instructions may be configured to cause the electronic device to, when the image is not convertible into the 3D image, provide a preview of the image resized according to the identified distance of the external electronic device through the external electronic device.

According to an embodiment, the instructions may be configured to cause the electronic device to identify the direction and distance of the external electronic device with respect to the electronic device based on at least one of an ultra-wide band (UWB) communication scheme or Bluetooth low energy (BLE) communication scheme of the communication module.

According to an embodiment, the instructions may be configured to cause the electronic device to identify an object included in the image, and generate a 3D image based on an object area where the identified object is included.

According to an embodiment, the instructions may be configured to cause the electronic device to provide, through the external electronic device, the preview of the 3D image set so that a size of the object area where the identified object is included corresponds to a display size of the external electronic device.

According to an embodiment, the external electronic device may include a watch-type wearable electronic device.

According to an embodiment, the at least one processor may be configured to, when transmitting a 3D image corresponding to the selection as the watchface of the external electronic device to the external electronic device, transmit, to the external electronic device, a plurality of 3D images corresponding to a preset angular range so that an object included in the image is moved according to a movement of the external electronic device within the preset angular range.

According to an embodiment, the at least one processor may be configured to, while displaying a 3D graphic image on the display, identify a direction and distance of the external electronic device with respect to the electronic device, based on the external electronic device being detected within the threshold range, and transmit a preview of the 3D image to the external electronic device so that the preview of the 3D graphic image varying according to the identified direction and distance of the external electronic device is displayed on a display of the external electronic device.

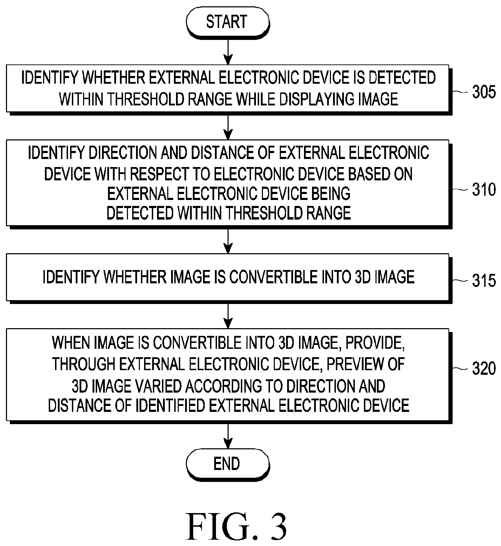

FIG. 3 is a flowchart illustrating operations of an electronic device according to an embodiment. Referring to FIG. 3, the operation method may include operations 305 to 320. Each operation of the operation method of FIG. 3 may be performed by an electronic device (e.g., at least one the electronic device 101 of FIGS. 1 and 2 or at least one processor (e.g., the processor 120 of FIG. 1 or the processor 220 of FIG. 2) of the electronic device). In an embodiment, at least one of operations 305 to 320 may be omitted or changed in order or may add other operations.

According to an embodiment, in operation 305, the electronic device 101 may identify whether the external electronic device is detected within a threshold range while displaying an image.

In operation 310, the electronic device 101 may identify a direction and distance of the external electronic device with respect to the electronic device, based on the external electronic device being detected within the threshold range. According to an embodiment, the electronic device 101 may identify the direction and distance of the external electronic device with respect to the electronic device based on at least one of an ultra-wide band (UWB) communication scheme or Bluetooth low energy (BLE) communication scheme of the communication module.

In operation 315, the electronic device 101 may identify whether the image is convertible into a 3D image. According to an embodiment, when the image is convertible into the 3D image, the electronic device 101 may identify an object included in the image and generate the 3D image based on the object area where the identified object is included.

In operation 320, in case that the image is convertible into the 3D image, the electronic device 101 may provide a preview of the 3D image varying according to the identified direction and distance of the external electronic device through the external electronic device. According to an embodiment, in the preview of the 3D image a size and shown surface of an object included in the image, may be varied according to the identified direction and distance of the external electronic device.

According to an embodiment, the electronic device 101 may provide, through the external electronic device, the preview of the 3D image set so that a size of the object area where the identified object is included corresponds to a display size of the external electronic device.

According to an embodiment, the electronic device 101 may providing a preview of a 3D image, in which a size and shown surface, of an object included in the image, are varied according to the direction and distance of the identified external electronic device, through the external electronic device.

According to an embodiment, the electronic device 101 may, while the preview of the 3D image is displayed through the external electronic device, identify whether the direction and distance of the external electronic device are varied, provide a preview of a 3D image, in which a size and shown surface of an object included in the image, are varied as the direction and distance of the external electronic device are varied, through the external electronic device, and in response to a selection for a watchface setting of the external electronic device, transmit a 3D image corresponding to the selection for the watchface setting of the external electronic device to the external electronic device.

According to an embodiment, the electronic device 101 may transmit, to the external electronic device, a plurality of 3D images corresponding to a preset angular range so that the object included in the image is moved according to a movement of the external electronic device within the preset angular range.

According to an embodiment, the electronic device 101 may, in case that the image is not convertible into the 3D image, provide a preview of the image resized according to the identified distance of the external electronic device through the external electronic device.

According to an embodiment, in response to a selection for the preview of the 3D image, the electronic device 101 may transmit, to the external electronic device, the 3D image corresponding to the selection as the representative image of the external electronic device.

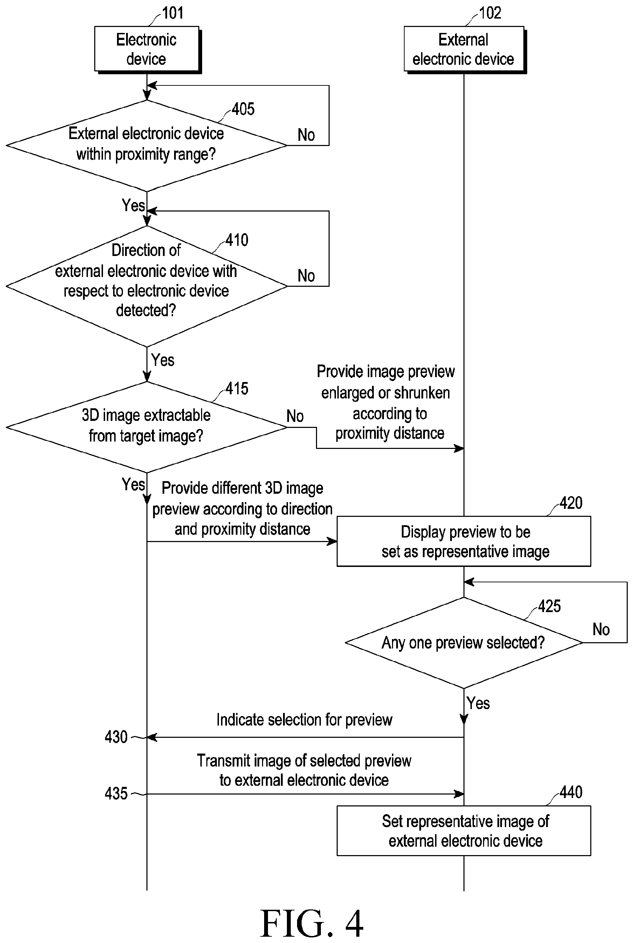

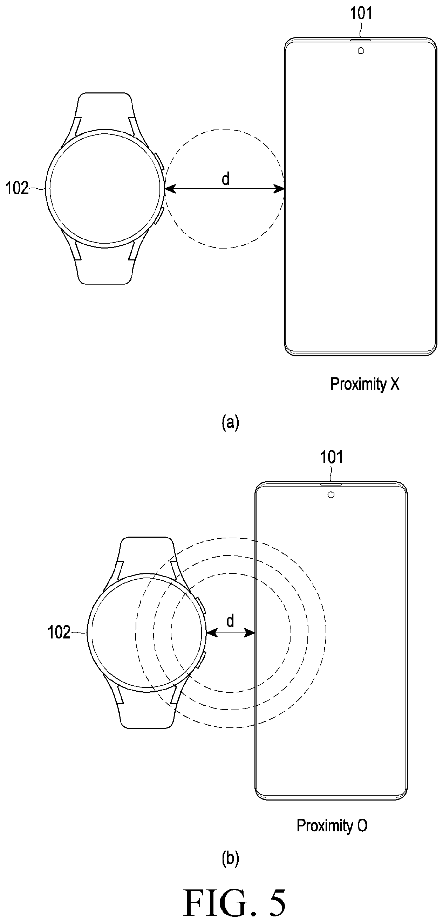

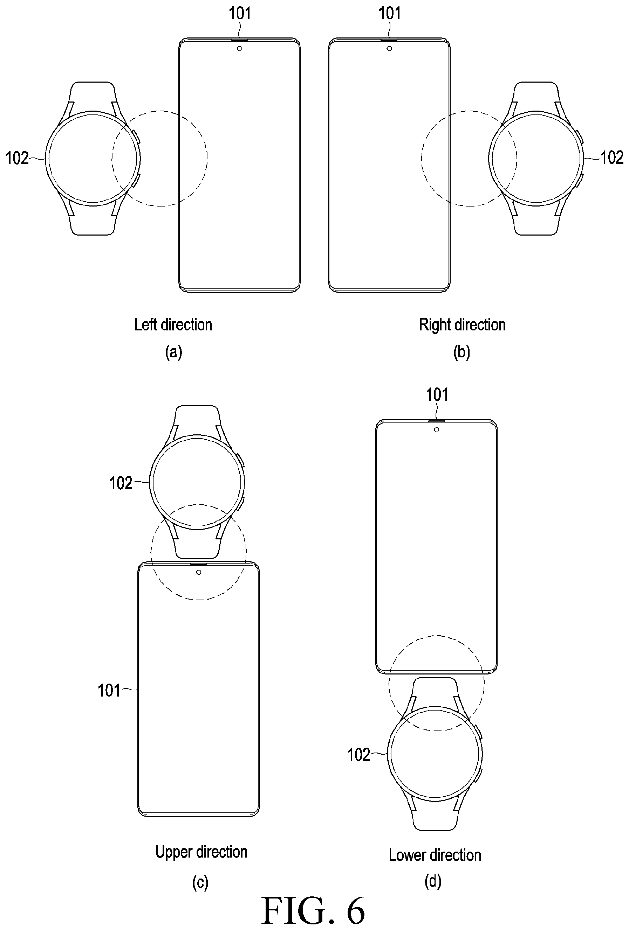

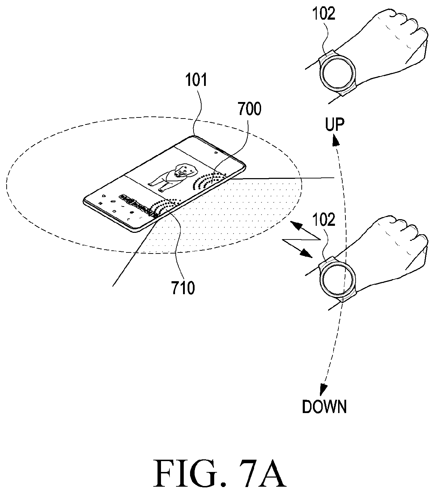

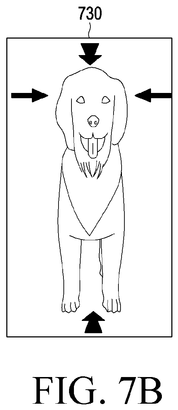

FIG. 4 is a flowchart illustrating signal transmission/reception between an electronic device and an external electronic device according to an embodiment. Referring to FIG. 4, the operation method may include operations 405 to 440. In an embodiment, at least one of operations 405 to 440 may be omitted or changed in order or may add other operations. Hereinafter, a description will be made with reference to FIGS. 5 to 7B to help understanding of the description of FIG. 4. FIG. 5 is a view illustrating a method for identifying a distance from an electronic device to an external electronic device according to an embodiment. FIG. 6 is a view illustrating a method for identifying a direction of an external electronic device with respect to an electronic device according to an embodiment. FIG. 7A is a view illustrating a method for identifying an upper or lower direction of an external electronic device with respect to an electronic device according to an embodiment. FIG. 7B is a view illustrating a method for obtaining a 3D image according to an embodiment.

In operation 405, the electronic device 101 may identify whether the external electronic device 102 is within the proximity range. For example, the external electronic device 102 may not be detected when the distance of the external electronic device 102 from the electronic device 101 is out of the proximity range with respect to the electronic device 101 as shown in FIG. 5(a). On the other hand, as shown in FIG. 5(b), when the distance from the electronic device 101 to the external electronic device 102 is within the proximity range with respect to the electronic device 101, the electronic device 101 may detect the external electronic device 102. Here, the proximity range (or proximity area) may be, e.g., a range (e.g., within 5 cm) identifiable by the proximity sensor of the sensor 276.

In response to identifying that the external electronic device 102 is within the proximity range, in operation 410, the electronic device 101 may identify whether the direction of the external electronic device 102 with respect to the electronic device 101 is detected. The electronic device 101 may identify which direction the external electronic device 102 is in a state in which the external electronic device 102 is proximate. For example, the external electronic device 102 may be positioned within the proximity range, such as when the external electronic device 102 is positioned in the left direction as shown in FIG. 6(a), when the external electronic device 102 is positioned in the right direction as shown in FIG. 6(b), when the external electronic device 102 is positioned in the upper direction as shown in FIG. 6(c), or when the external electronic device 102 is positioned in the lower direction as shown in FIG. 6(d), with respect to the electronic device 101.

For example, as illustrated in FIG. 7A, the external electronic device 102 may be moved in the upper direction or lower direction within the proximity range. The electronic device 101 may identify vertical movement through UWB altitude tracking as well as UWB direction tracking. For example, when the external electronic device 102 is positioned in the upper direction, a preview of an image in the form of being viewed from top to bottom may be provided through the external electronic device 102. Further, when the external electronic device 102 is positioned in the lower direction, a preview of an image in the form of being viewed from bottom to top may be provided through the external electronic device 102. For example, referring to FIG. 7B, an image 730 is displayed on the display of the electronic device 101, and when the external electronic device 102 moves from top to bottom within the proximity range, the electronic device 101 may use the image 730 to provide a preview in which the image in the form of being viewed from top to bottom changes into the image in the form of being viewed from bottom to top. Here, when the external electronic device 102 is detected in the upper direction or lower direction within the proximity range, the electronic device 101 may output the indicators 700 and 710 at each position corresponding to the detected direction on the screen. The indicators 700 and 710 may indicate the direction in which the external electronic device 102 is detected.

In operation 415, based on the detection of the direction of the external electronic device 102, the electronic device 101 may identify whether it is possible to extract a 3D image from the target image. On the other hand, when the direction of the external electronic device 102 is not detected within a predetermined time, the electronic device 101 may terminate the operation for setting the representative image. Here, the target image is an image currently displayed on the display of the electronic device 101, and may be an image for setting as a representative image of the external electronic device 102.

In operation 415, when it is possible to extract a 3D image from the target image, the electronic device 101 may provide another 3D image preview to the external electronic device 102 according to the direction and the proximity distance. On the other hand, when it is not possible to extract a 3D image from the target image, the electronic device 101 may provide an enlarged or shrunken image preview to the external electronic device 102 according to the proximity distance.

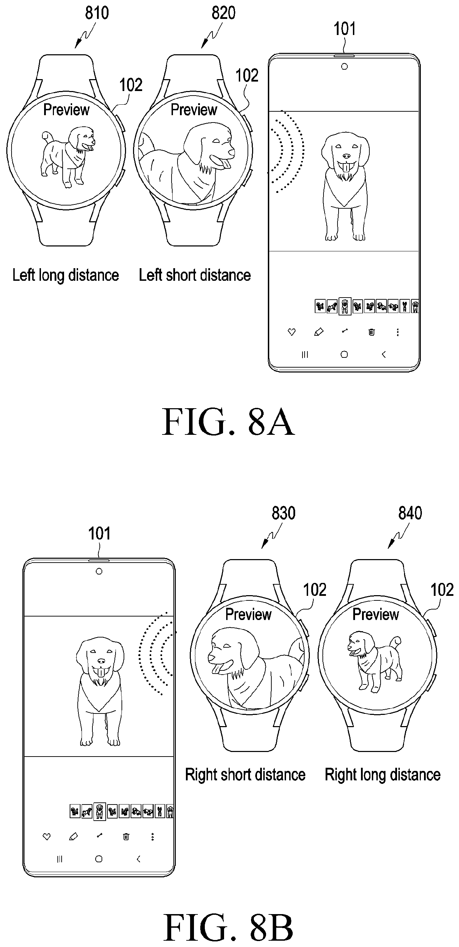

Meanwhile, in response to receiving the preview to be set as a representative image from the electronic device 101, the external electronic device 102 may display the preview to be set as a representative image in operation 420. For example, with respect to the image displayed on the electronic device 101, the image displayed on the external electronic device 102 may vary depending on the direction and distance of the external electronic device 102 as shown in FIGS. 8A to 9B.

FIG. 8A is an exemplary view illustrating an external electronic device displaying a preview that varies depending on a left long distance or a left short distance with respect to an electronic device according to an embodiment. As shown in FIG. 8A, when comparing the preview in the external electronic device 102 at the left short distance 820 and the preview in the external electronic device 102 at the left long distance 810 with respect to the electronic device 101, the size of the object in the preview corresponding to the left short distance 820 may be larger than the size of the object in the preview corresponding to the left long distance 810. Further, assuming that an image containing an object in front is displayed on the display of the electronic device 101, the surface corresponding to the left direction, of the object in the preview in the external electronic device 102, may be seen. As described above, as the distance to the electronic device 101 decreases, the size of the object in the preview may increase and, as such, a preview of a 3D image may be displayed in which the size and shown surface of the object included in the image vary according to the direction and distance of the external electronic device 102.

FIG. 8B is an exemplary view illustrating an external electronic device displaying a preview that varies depending on a right long distance or a right short distance with respect to an electronic device according to an embodiment. As shown in FIG. 8B, when comparing the preview in the external electronic device 102 at the right short distance 830 and the preview in the external electronic device 102 at the right long distance 840 with respect to the electronic device 101, the size of the object in the preview corresponding to the right short distance 830 may be larger than the size of the object in the preview corresponding to the right long distance 840. Further, assuming that an image containing an object in front is displayed on the display of the electronic device 101, the object in the preview in the external electronic device 102 may be shown with a surface corresponding to the right direction.

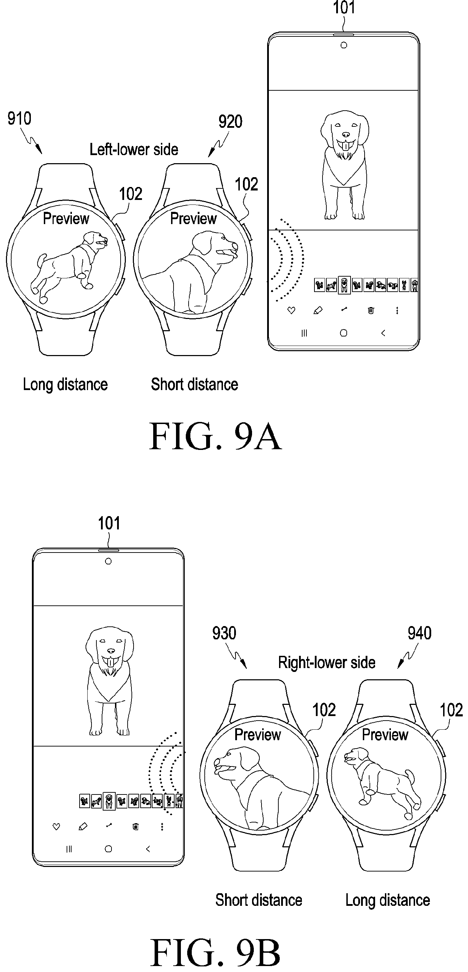

FIG. 9A is an exemplary view illustrating an external electronic device displaying a preview that varies depending on a left lower long distance or a left lower short distance with respect to an electronic device according to an embodiment. Referring to FIG. 9A, the preview of the 3D image in which the size and shown surface of the object included in the image are varied according to the direction and distance of the external electronic device 102 may be displayed as in the preview in the external electronic device 102 at the left lower long distance 910 and in the preview in the external electronic device 102 at the left lower short distance 920.

FIG. 9B is an exemplary view illustrating an external electronic device displaying a preview that varies depending on a right lower long distance or a right lower short distance with respect to an electronic device according to an embodiment. Referring to FIG. 9B, as in the preview in the external electronic device 102 at the right lower short distance 930 and the preview in the external electronic device 102 at the right lower long distance 940, the size of the object in the preview corresponding to the right lower short distance 930 may be larger than the size of the object in the preview corresponding to the right lower long distance 940, according to the direction and distance of the external electronic device 102. Further, the shown surface of the object included in the image may be varied.

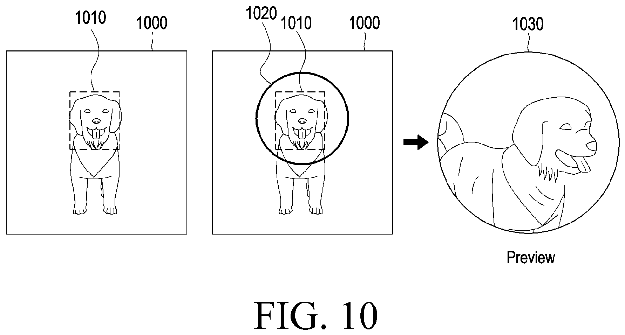

For example, referring to FIG. 10, the electronic device 101 may identify the object 1010 included in the target image 1000 and generate a preview 1030 of a 3D image for the target image based on the object 1010. Here, FIG. 10 is a view illustrating a preview with respect to an object included in an image according to an embodiment. For example, the electronic device 101 may set an object area 1020 centered on the identified object 1010, e.g., the face of a person or animal and set the size of the object area 1020 to correspond to the display size and/or shape of the external electronic device 102. According to an embodiment, although generating a 3D image, the electronic device 101 may provide a preview of a 3D image having small transmission capacity to the external electronic device 102 considering the transmission load rather than transferring the generated 3D image itself to the external electronic device 102.

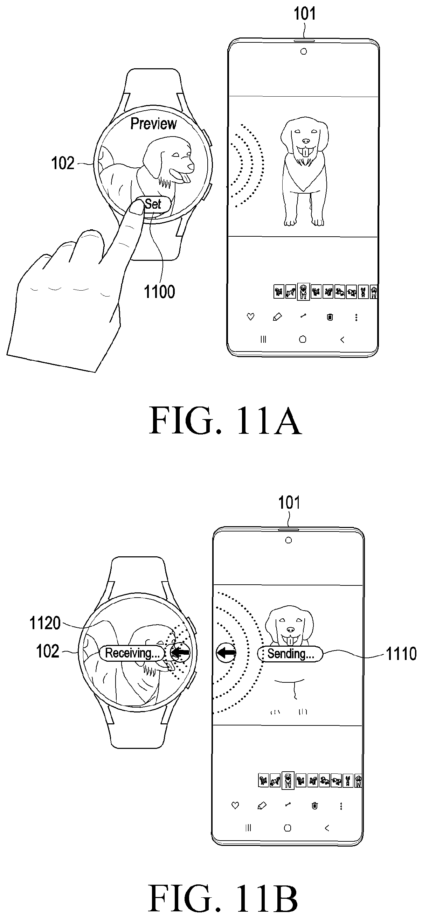

In operation 425, the external electronic device 102 may identify whether there is any one preview selection from the user. In operation 430, the external electronic device 102 may notify the electronic device 101 of the selection for the preview. For example, the external electronic device 102 may transmit information about the preview corresponding to the selection to the electronic device 101 when the user selects the setting 1100 for the currently displayed preview, as shown in FIG. 11A. Here, FIG. 11A is a view illustrating a method for setting a representative image according to an embodiment.

In operation 435, in response to the selection for the preview, the electronic device 101 may transmit the image of the selected preview to the external electronic device 102. The electronic device 101 may identify the actual image of the preview corresponding to the selected time point, e.g., the selected direction and distance, and transmit the identified image to the external electronic device 102 as shown in FIG. 11B. FIG. 11B is a view illustrating a method for transmitting an image according to a setting of a representative image according to an embodiment. As shown in FIG. 11B, messages 1110 and 1120 indicating transmission of an image to be set as a representative image of the external electronic device 102 may be displayed on the electronic device 101 and the external electronic device 102, respectively.

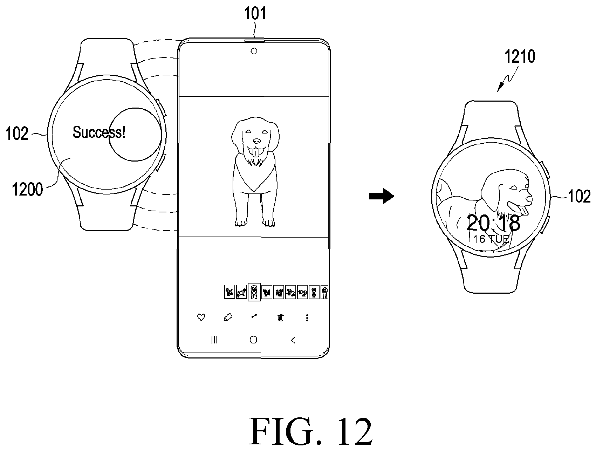

In operation 440, the external electronic device 102 may set a representative image of the external electronic device 102 using the received image. For example, as shown in FIG. 12, after the content 1200 indicating that the setting of the representative image of the external electronic device 102 is successful is displayed, the external electronic device 102 may display the representative image 1210 including an object in which the shown surface and size have been varied corresponding to the direction and distance. Here, FIG. 12 is an exemplary view illustrating setting completion of a representative image according to an embodiment.

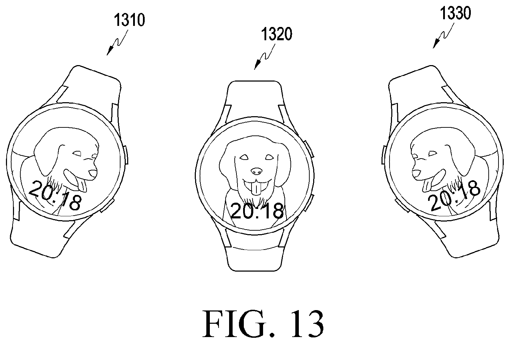

Meanwhile, an example in which the preview displayed on the external electronic device 102 is varied according to the direction and angle in the external electronic device 102 with respect to the electronic device 101 has been described above but, as shown in FIG. 13, the representative image may be set to be moved within a predetermined angular range according to a movement of the external electronic device 102 itself after the representative image is set. FIG. 13 is an exemplary view illustrating a representative image that varies according to a movement of an external electronic device within a predetermined angular range according to an embodiment.

Referring to FIG. 13, the electronic device 101 may transmit, to the external electronic device 102, a plurality of 3D images corresponding to a preset angular range so that the object included in the representative image is moved according to a movement of the external electronic device 102 within the preset angular range when transmitting the representative image. For example, the external electronic device 102 may identify a change in movement such as posture of the external electronic device 102 using a sensor, e.g., a gyro sensor, in the external electronic device 102 in a state of receiving a plurality of 3D images corresponding to a preset angular range from the electronic device 101. The external electronic device 102 may provide an animation effect as if objects in the representative images 1310, 1320, and 1330 at different angles are tilted according to the movement change using the plurality of 3D images.

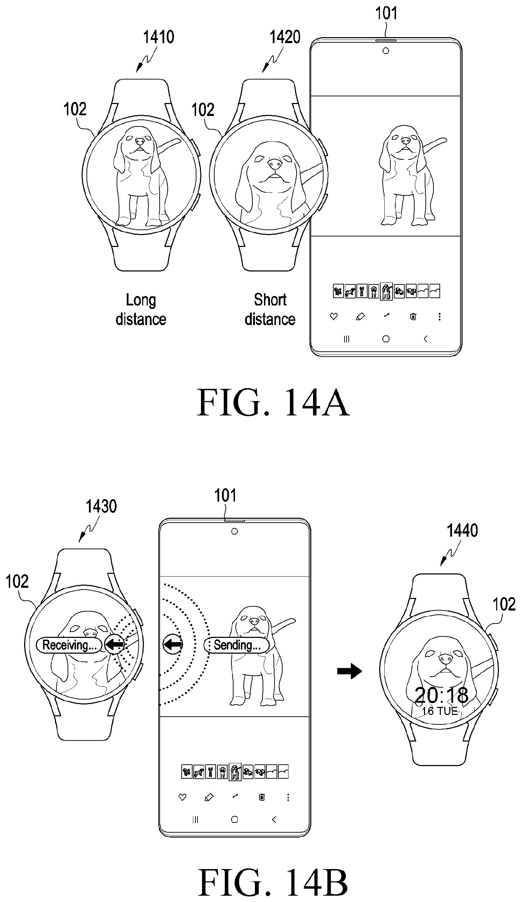

Meanwhile, although an example in which a 2D image is convertible into a 3D image has been described above, a case where the 2D image is not convertible into the 3D image is described with reference to FIGS. 14A and 14B. FIG. 14A is an exemplary view illustrating an external electronic device displaying a preview that resizes depending on distance when it is not convertible into a 3D image according to an embodiment. FIG. 14B is an exemplary view according to setting completion of a representative image when it is not convertible into a 3D image according to an embodiment.

When not convertible into a 3D image, as shown in FIG. 14A, the electronic device 101 may control to display, through the external electronic device 102, a preview of an image resized, e.g., a preview 1410 of an image shrunken or a preview 1420 of an image enlarged, according to the distance of the external electronic device 102 with respect to the electronic device 101. For example, when the external electronic device 102 is positioned at a short distance close to the electronic device 101, the object in the preview may be displayed larger than when it is positioned at the long distance 1410. As shown in FIG. 14B, in response to selection for the preview displayed on the external electronic device 102, the electronic device 101 may transmit the image of the selected preview to the external electronic device 102, and the external electronic device 102 may display a screen 1430 indicating that it is being received. Thereafter, if reception of the image of the selected preview is completed, the external electronic device 102 may display a representative image 1440 including the resized object.

As described above, according to an embodiment, the electronic device 101 may control to adaptively vary and display the preview displayed on the external electronic device 102 based on the position of the external electronic device 102 with respect to the electronic device 101. As the function for setting a representative image may be activated simply by positioning the external electronic device 102 proximate to the electronic device 101 even without using menus for setting an image in the electronic device 101 as a representative image of the external electronic device 102, it is possible to enhance user convenience by an intuitive representative image setting method. Further, the electronic device 101 may provide a preview including an object in which a shown surface and size are varied according to the direction and distance of the external electronic device 102 to the external electronic device 102, increasing user's interest.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-volatile storage medium storing instructions configured to, when executed by a processor 220 of an electronic device 101, cause the electronic device to perform at least one operation, the at least one operation may comprise identifying whether the external electronic device is detected within a threshold range while displaying an image. According to an embodiment, the at least one operation may comprise identifying a direction and distance of the external electronic device with respect to the electronic device, based on the external electronic device being detected within the threshold range. According to an embodiment, the at least one operation may comprise identifying whether the image is convertible into a 3D image. According to an embodiment, the at least one operation may comprise, in case that the image is convertible into the 3D image, providing a preview of the 3D image varying according to the identified direction and distance of the external electronic device through the external electronic device.

## Claims

1. An electronic device (101), comprising:
a communication module (290);
a display (260);
memory (230) storing instructions; and
a processor (220),
wherein the instructions are configured to, when executed by the processor, cause the electronic device to:
connect to an external electronic device through the communication module;
identify whether the external electronic device is detected within a threshold range while displaying an image on the display;
identify a direction and distance of the external electronic device with respect to the electronic device, based on the external electronic device being detected within the threshold range;
identify whether the image is convertible into a 3D image; and
in case that the image is convertible into the 3D image, provide a preview of the 3D image varying according to the identified direction and distance of the external electronic device through the external electronic device.

2. The electronic device of claim 1, wherein in the preview of the 3D image, a size and shown surface of an object included in the image, is varied according to the identified direction and distance of the external electronic device.

3. The electronic device of claim 1 or 2, wherein the instructions are configured to cause the electronic device to:
while the preview of the 3D image is displayed through the external electronic device, identify whether the direction and distance of the external electronic device are varied;
provide a preview of a 3D image, in which a size and shown surface of an object included in the image, are varied as the direction and distance of the external electronic device are varied, through the external electronic device; and
in response to a selection for a watchface setting of the external electronic device, transmit a 3D image corresponding to the selection for the watchface setting of the external electronic device to the external electronic device.

4. The electronic device of any one of claims 1 to 3, wherein the instructions are configured to cause the electronic device to identify the direction and distance of the external electronic device with respect to the electronic device based on at least one of an ultra-wide band (UWB) communication scheme or Bluetooth low energy (BLE) communication scheme of the communication module.

5. The electronic device of any one of claims 1 to 4, wherein the instructions are configured to cause the electronic device to:
identify an object included in the image; and
generate a 3D image based on an object area where the identified object is included.

6. The electronic device of any one of claims 1 to 5, wherein the instructions are configured to cause the electronic device to provide, through the external electronic device, the preview of the 3D image set so that a size of the object area where the identified object is included corresponds to a display size of the external electronic device.

7. The electronic device of any one of claims 1 to 6, wherein the external electronic device is a watch-type wearable electronic device.

8. The electronic device of any one of claims 1 to 7, wherein the instructions are configured to cause the electronic device to, in case that the image is not convertible into the 3D image, provide a preview of the image resized according to the identified distance of the external electronic device through the external electronic device.

9. The electronic device of any one of claims 1 to 8, wherein the instructions are configured to cause the electronic device to, when transmitting a 3D image corresponding to the selection as the watchface of the external electronic device to the external electronic device, transmit, to the external electronic device, a plurality of 3D images corresponding to a preset angular range so that an object included in the image is moved according to a movement of the external electronic device within the preset angular range.

10. The electronic device of any one of claims 1 to 9, wherein the instructions are configured to cause the electronic device to:
while displaying a 3D graphic image on the display, identify a direction and distance of the external electronic device with respect to the electronic device, based on the external electronic device being detected within the threshold range; and
transmit a preview of the 3D image to the external electronic device so that the preview of the 3D graphic image varying according to the identified direction and distance of the external electronic device is displayed on a display of the external electronic device.

11. A method for providing a representative image of an external electronic device by an electronic device, the method comprising:
identifying whether the external electronic device is detected within a threshold range while displaying an image;
identifying a direction and distance of the external electronic device with respect to the electronic device, based on the external electronic device being detected within the threshold range;
identifying whether the image is convertible into a 3D image; and
in case that the image is convertible into the 3D image, providing a preview of the 3D image varying according to the identified direction and distance of the external electronic device through the external electronic device.

12. The method of claim 11, wherein in the preview of the 3D image, a size and shown surface of an object included in the image, is varied according to the identified direction and distance of the external electronic device.

13. The method of claim 11 or 12, further comprising:
while the preview of the 3D image is displayed through the external electronic device, identifying whether the direction and distance of the external electronic device are varied;
providing a preview of a 3D image, in which a size and shown surface of an object included in the image, are varied as the direction and distance of the external electronic device are varied, through the external electronic device; and
in response to a selection for a watchface setting of the external electronic device, transmitting a 3D image corresponding to the selection for the watchface setting of the external electronic device to the external electronic device.

14. The method of any one of claims 11 to 13, further comprising:
in case that the image is convertible into the 3D image, identifying an object included in the image; and
generating a 3D image based on an object area where the identified object is included.

15. A non-volatile storage medium storing instructions configured to, when executed by a processor (220) of an electronic device (101), cause the electronic device to perform at least one operation, the at least one operation comprising:
identifying whether the external electronic device is detected within a threshold range while displaying an image;
identifying a direction and distance of the external electronic device with respect to the electronic device, based on the external electronic device being detected within the threshold range;
identifying whether the image is convertible into a 3D image; and
in case that the image is convertible into the 3D image, providing a preview of the 3D image varying according to the identified direction and distance of the external electronic device through the external electronic device.
